# EUROPEAN PATENT APPLICATION

(11) **EP 3 648 526 A1**
(43) Date of publication of application: **06.05.2020**
(21) Application number: 18844487.1
(22) Date of filing: 03.08.2018
(51) Int. Cl.: H04W 72/04

(54) **METHOD AND DEVICE FOR INITIATING RANDOM ACCESS PROCEDURE**

(30) Priority: 09.08.2017 CN 201710684143
(71) Applicant: Huawei Technologies Co., Ltd., Longgang District Shenzhen, Guangdong 518129 (CN)
(72) Inventor: SHAO, Jiafeng, Shenzhen Guangdong 518129 (CN)
(74) Representative: Goddar, Heinz J.
(86) International application number: PCT/CN2018/098679
(87) International publication number: WO 2019/029460

(57) **Abstract**

Embodiments of this application provide a method and an apparatus for initiating a random access process. The method includes: determining that a first time interval is greater than or equal to a first time threshold, and there is no available UL-SCH resource in a first time domain resource, where the first time interval is a time interval between a first moment of the first time domain resource and a second moment of a second time domain resource, and the second time domain resource is a time domain resource in which a grant-free UL-SCH resource is located; and initiating a random access process. In this application, when no PUCCH resource carrying a scheduling request is configured, sending of grant-free uplink transmission by a terminal device is prevented from being affected because the terminal device is prevented from frequently initiating a random access process, and a probability of initiating a random access process is reduced by limiting the first time threshold, to reduce a transmission latency of grant-free uplink data, and satisfy a service requirement of a service having a low latency requirement.

## Description

This application claims priority to Chinese Patent Application No. 201710684143.2, filed with the Chinese Patent Office on August 9, 2017 and entitled "METHOD AND APPARATUS FOR INITIATING RANDOM ACCESS PROCESS", which is incorporated herein by reference in its entirety.

### TECHNICAL FIELD

Embodiments of this application relate to mobile communications technologies, and in particular, to a method and an apparatus for initiating a random access process.

### BACKGROUND

In a 5th generation mobile radio technology, namely, a new radio (New Radio, NR) technology, a system has a plurality of service types. The plurality of service types correspond to different service requirements. For example, an ultra-reliable low-latency communications (Ultra-reliable low latency communications, URLLC) service requires a short latency and high reliability, to be specific, transmission succeeds in 1 ms. A random access process is a process in which a terminal device establishes a communication connection to a network, to implement the foregoing service.

In the prior art, when a scheduling request (Scheduling Request, SR) is in a queue, a terminal device performs the following operations in each transmission time interval (Transmission Time Interval, TTI): determining whether an uplink shared channel (Uplink Shared Channel, UL-SCH) resource exists in a current TTI; if it is determined that no UL-SCH resource exists in the current TTI, further determining whether a valid physical uplink control channel (Physical Uplink Control Channel, PUCCH) resource configured for the SR exists; and if it is determined that no valid PUCCH resource configured for the SR exists in the current TTI, initiating a random access process.

However, when the random access process is initiated by using the prior art, data may still be normally transmitted between the terminal device and a network device. Therefore, the method for initiating a random access process has at least the following disadvantages: The random access process causes a relatively long uplink data transmission latency, and does not satisfy a service requirement of a service having a low latency requirement.

### SUMMARY

Embodiments of this application provide a method and an apparatus for initiating a random access process, to reduce an uplink data transmission latency.

According to a first aspect, an embodiment of this application provides a method for initiating a random access process, including:
determining that a first time interval is greater than or equal to a first time threshold, and there is no available UL-SCH resource in a first time domain resource, where the first time interval is a time interval between a first moment of the first time domain resource and a second moment of a second time domain resource, and the second time domain resource is a time domain resource in which a grant-free UL-SCH resource is located; and/or determining that a second time interval is greater than or equal to a second time threshold, and there is no available UL-SCH resource in a first time domain resource, where the second time interval is a time interval between a first moment of the first time domain resource and a third moment of a third time domain resource, and the third time domain resource is a time domain resource in which a PUCCH resource carrying a scheduling request is located; and
initiating a random access process.

In a possible design, the method further includes: determining that at least one scheduling request is in a queue.

In a possible design, after the determining that at least one scheduling request is in a queue, the method further includes: determining the first time threshold based on the at least one scheduling request, where a first correspondence exists between the at least one scheduling request and the first time threshold, and the first correspondence is configured by using higher layer signaling, or is predefined, or is notified by using physical layer signaling; and/or determining the second time threshold based on the at least one scheduling request, where a second correspondence exists between the at least one scheduling request and the second time threshold, and the second correspondence is configured by using higher layer signaling, or is predefined, or is notified by using physical layer signaling.

In a possible design, the method further includes: determining that there is to-be-transmitted uplink data; or determining uplink data corresponding to a second logical channel set, where a logical channel in the second logical channel set corresponds to a second subcarrier spacing and/or a second time length and/or a second service.

In a possible design, the method further includes: determining the first time threshold based on the uplink data, where a third correspondence exists between the uplink data and the first time threshold; or determining the first time threshold based on the second logical channel set, where a fourth correspondence exists between the second logical channel set and the first time threshold. Both the third correspondence and the fourth correspondence are configured by using higher layer signaling, or are predefined, or are notified by using physical layer signaling.

In a possible design, the method further includes: determining the second time threshold based on the uplink data, where a fifth correspondence exists between the uplink data and the second time threshold; or determining the second time threshold based on the second logical channel set, where a sixth correspondence exists between the second logical channel set and the second time threshold. Both the fifth correspondence and the sixth correspondence are configured by using higher layer signaling, or are predefined, or are notified by using physical layer signaling.

According to a second aspect, an embodiment of this application provides an apparatus for initiating a random access process, including: a determining module, configured to: determine that a first time interval is greater than or equal to a first time threshold, and there is no available UL-SCH resource in a first time domain resource, where the first time interval is a time interval between a first moment of the first time domain resource and a second moment of a second time domain resource, and the second time domain resource is a time domain resource in which a grant-free UL-SCH resource is located; and/or determine that a second time interval is greater than or equal to a second time threshold, and there is no available UL-SCH resource in a first time domain resource, where the second time interval is a time interval between a first moment of the first time domain resource and a third moment of a third time domain resource, and the third time domain resource is a time domain resource in which a PUCCH resource carrying a scheduling request is located; and an initiation module, configured to initiate a random access process.

In a possible design, the determining module is further configured to determine that at least one scheduling request is in a queue.

In a possible design, the determining module is further configured to: after it is determined that the at least one scheduling request is in the queue, determine the first time threshold based on the at least one scheduling request, where a first correspondence exists between the at least one scheduling request and the first time threshold, and the first correspondence is configured by using higher layer signaling, or is predefined, or is notified by using physical layer signaling; and/or after it is determined that the at least one scheduling request is in the queue, determine the second time threshold based on the at least one scheduling request, where a second correspondence exists between the at least one scheduling request and the second time threshold, and the second correspondence is configured by using higher layer signaling, or is predefined, or is notified by using physical layer signaling.

In a possible design, the determining module is further configured to: determine that there is to-be-transmitted uplink data; or determine uplink data corresponding to a second logical channel set, where a logical channel in the second logical channel set corresponds to a second subcarrier spacing and/or a second time length and/or a second service.

In a possible design, the determining module is further configured to: determine the first time threshold based on the uplink data, where a third correspondence exists between the uplink data and the first time threshold, and the third correspondence is configured by using higher layer signaling, or is predefined, or is notified by using physical layer signaling; or determine the first time threshold based on the second logical channel set, where a fourth correspondence exists between the second logical channel set and the first time threshold, and the fourth correspondence is configured by using higher layer signaling, or is predefined, or is notified by using physical layer signaling.

In a possible design, the determining module is further configured to: determine the second time threshold based on the uplink data, where a fifth correspondence exists between the uplink data and the second time threshold, and the fifth correspondence is configured by using higher layer signaling, or is predefined, or is notified by using physical layer signaling; or determine the second time threshold based on the second logical channel set, where a sixth correspondence exists between the second logical channel set and the second time threshold, and the sixth correspondence is configured by using higher layer signaling, or is predefined, or is notified by using physical layer signaling.

With reference to any possible design of the first aspect and the second aspect, the following possible designs further exist:

In a possible design, the second time domain resource is an A^{th} time domain resource that is after the first time domain resource and in which the grant-free UL-SCH resource is located, and A is a positive integer greater than or equal to 1; and/or the third time domain resource is a B^{th} time domain resource that is after the first time domain resource and in which the PUCCH resource carrying the scheduling request is located, and B is a positive integer greater than or equal to 1.

In a possible design, a relationship between the first moment and the second moment is any one of the following correspondences:
the first moment is a start moment of the first time domain resource, and the second moment is a start moment of the second time domain resource;
the first moment is a start moment of the first time domain resource, and the second moment is an end moment of the second time domain resource;
the first moment is an end moment of the first time domain resource, and the second moment is a start moment of the second time domain resource; and
the first moment is an end moment of the first time domain resource, and the second moment is an end moment of the second time domain resource.

In a possible design, the at least one scheduling request is a scheduling request corresponding to a first logical channel set, and a logical channel in the first logical channel set corresponds to a first subcarrier spacing and/or a first time length and/or a first service.

In a possible design, the uplink data is uplink data corresponding to a third service, and the third service is a URLLC service.

In a possible design, a length of the first time domain resource is less than or equal to a third time length.

In a possible design, a length of the second time domain resource is less than or equal to a fourth time length; and/or a subcarrier spacing of a frequency domain resource in which a grant-free UL-SCH resource is located is greater than or equal to a third subcarrier spacing.

In a possible design, a length of the third time domain resource is less than or equal to a fifth time length; and/or a subcarrier spacing of a frequency domain resource in which a PUCCH resource carrying a scheduling request is located is greater than or equal to a fourth subcarrier spacing.

According to a third aspect, an embodiment of this application provides a terminal device, including a processor and a memory. The memory is configured to store an instruction. The processor is configured to execute the instruction stored in the memory. When the processor executes the instruction stored in the memory, the terminal device is configured to perform the method according to the first aspect.

According to a fourth aspect, an embodiment of this application provides an apparatus for initiating a random access process, including at least one processing element (or chip) configured to perform the method according to the first aspect.

According to a fifth aspect, an embodiment of this application provides a program, where the program is configured to perform the method according to the first aspect when being executed by a processor.

According to a sixth aspect, an embodiment of this application provides a program product, for example, a computer-readable storage medium, including the program according to the fifth aspect.

According to a seventh aspect, an embodiment of this application provides a computer-readable storage medium. When an instruction in the computer-readable storage medium is executed by a processor of an apparatus for initiating a random access process, the apparatus for initiating a random access process is enabled to perform the method for initiating a random access process according to the embodiment of this application in the first aspect.

The embodiments of this application provide the method and the apparatus for initiating a random access process. When there is no available UL-SCH resource in the first time domain resource, a relationship between the first time interval and the first time threshold is further determined, to be specific, the first time interval is greater than or equal to the first time threshold. When both the two conditions are satisfied, the random access process is initiated. Therefore, when no PUCCH resource carrying a scheduling request is configured, sending of grant-free uplink transmission by the terminal device is prevented from being affected because the terminal device is prevented from frequently initiating a random access process, and a probability of initiating a random access process is reduced by limiting the first time threshold, to reduce a transmission latency of grant-free uplink data, and satisfy a service requirement of a service having a low latency requirement. Alternatively, when there is no available UL-SCH resource in the first time domain resource, a relationship between the second time interval and the second time threshold is further determined, to be specific, the second time interval is greater than or equal to the second time threshold. When both the two conditions are satisfied, the random access process is initiated. Therefore, when the PUCCH resource carrying the scheduling request is configured, to prevent the terminal device from waiting for a long time, the random access process is not initiated, and consequently, an uplink transmission latency of the terminal device is increased. A probability of initiating a random access process is increased by adding a condition in which the second time interval is greater than or equal to the second time threshold, to reduce an uplink data transmission latency and satisfy a service requirement of a service having a low latency requirement.

### BRIEF DESCRIPTION OF DRAWINGS

FIG. 1 is a schematic diagram of a communications system according to an embodiment of this application;
FIG. 2 is a flowchart of a method for initiating a random access process according to an embodiment of this application;
FIG. 3 is a flowchart of a method for initiating a random access process according to another embodiment of this application;
FIG. 4 is a flowchart of a method for initiating a random access process according to still another embodiment of this application;
FIG. 5 is a flowchart of a method for initiating a random access process according to yet another embodiment of this application;
FIG. 6 is a flowchart of a method for initiating a random access process according to still yet another embodiment of this application;
FIG. 7 is a schematic structural diagram of an apparatus for initiating a random access process according to an embodiment of this application; and
FIG. 8 is a schematic structural diagram of a terminal device according to an embodiment of this application.

### DESCRIPTION OF EMBODIMENTS

Embodiments of this application can be applied to a wireless communications system, for example, a global system for mobile communications (Global System for Mobile communication, GSM), a code division multiple access (Code Division Multiple Access, CDMA) system, a wideband code division multiple access (Wideband Code Division Multiple Access, WCDMA) system, a general packet radio service (General Packet Radio Service, GPRS) system, a universal mobile telecommunications system (Universal Mobile Telecommunications System, UMTS), and in particular, can be applied to a long term evolution (Long Term Evolution, LTE) system, an evolved system of the LTE system, and an NR system.

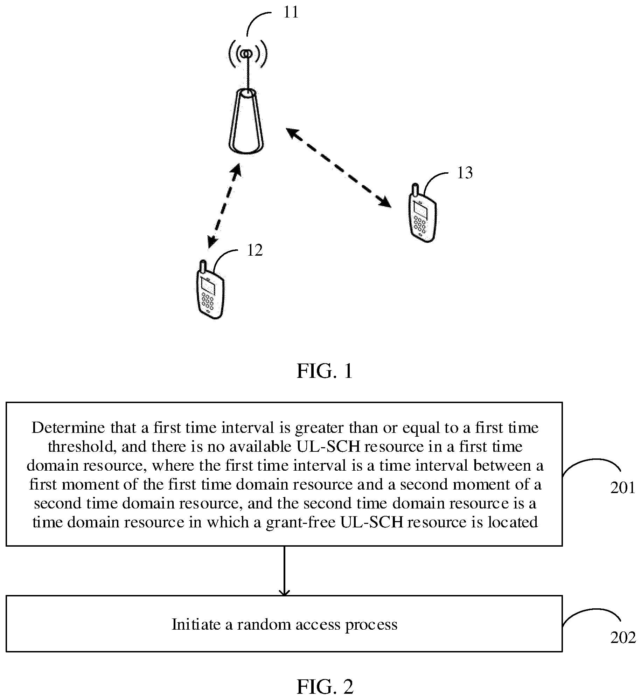

FIG. 1 is a schematic diagram of a communications system according to an embodiment of this application. As shown in FIG. 1, the communications system includes a base station 11 and at least one terminal device. Herein, two terminal devices are used as an example for description, and the two terminal devices are respectively a terminal device 12 and a terminal device 13. The terminal device 12 and the terminal device 13 are located in a coverage of the base station 11 and communicate with the base station 11, to implement the following technical solutions provided in the embodiments of this application. For example, the base station 11 is a base station in an LTE system, the terminal device 12 and the terminal device 13 are corresponding terminal devices in the LTE system, both the base station 11 and the terminal device 12 are devices supporting short TTI transmission, and the terminal device 13 is a device not supporting short TTI transmission. The base station 11 may communicate with the terminal device 12 by using a short TTI or a normal TTI of 1 ms. The base station 11 may communicate with the terminal device 13 by using a normal TTI of 1 ms.

The embodiments are described in the embodiments of this application with reference to a network device and a terminal device. The network device and the terminal device may work on a licensed frequency band or an unlicensed frequency band.

The terminal device may also be referred to as user equipment (User Equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may be a station (STATION, ST) in a wireless local area network (Wireless Local Area Networks, WLAN), or may be a cellular phone, a cordless telephone set, a session initiation protocol (Session Initiation Protocol, SIP) phone, a wireless local loop (Wireless Local Loop, WLL) station, a personal digital assistant (Personal Digital Assistant, PDA) device, a handheld device having a wireless communication function, a computing device, another processing device connected to a wireless modem, a vehicle-mounted device, a wearable device, a terminal device in a next generation communications system such as a 5th generation (fifth-generation, 5G) communications network, or a terminal device in a future evolved public land mobile network (Public Land Mobile Network, PLMN), or a terminal device in an NR system.

By way of example but not limitation, in the embodiments of this application, the terminal device may alternatively be a wearable device. The wearable device may also be referred to as a wearable intelligent device, and is a general term for wearable devices such as glasses, gloves, watches, clothes, and shoes that are developed by applying wearable technologies to intelligent designs of daily wear. The wearable device is a portable device that is directly worn on the body or integrated into clothes or an accessory of a user. The wearable device is not merely a hardware device, and further implements powerful functions through software support, data exchange, and cloud interaction. Generalized wearable intelligent devices include full-featured and large-size devices that can implement complete or partial functions without depending on smartphones. For example, the generalized wearable intelligent devices are, for example, smart watches or smart glasses, and devices, such as various smart bands or smart jewelry for monitoring physical signs, that focus on only one type of application function and need to work with other devices such as smartphones.

The network device may be a device, such as a network device, configured to communicate with a mobile device. The network device may be an access point (Access Point, AP) in a WLAN, a base transceiver station (Base Transceiver Station, BTS) in GSM or CDMA, a NodeB (NodeB, NB) in WCDMA, an evolved NodeB (evolved Node B, eNB or eNodeB) in LTE, a relay station or an access point, a vehicle-mounted device, a wearable device, a network device in a future 5G network, a network device in a future evolved PLMN network, a new generation NodeB (new generation Node B, gNodeB) in an NR system, or the like.

In addition, in the embodiments of this application, the network device provides a service to a cell, and the terminal device communicates with the network device by using a transmission resource (for example, a frequency domain resource or a spectrum resource) used in the cell. The cell may be a cell corresponding to a network device (for example, a base station), and the cell may belong to a macro base station, or may belong to a base station corresponding to a small cell (small cell). The small cell herein may include a metro cell (Metro cell), a micro cell (Micro cell), a pico cell (Pico cell), a femto cell (Femto cell), and the like. These small cells are characterized by small coverage and low transmit power and are applicable to providing a high-rate data transmission service.

In addition, a plurality of cells may simultaneously work at a same frequency on a carrier in an LTE system or an NR system. In some special scenarios, it may also be considered that the concept of carrier is equivalent to the concept of cell. For example, in a carrier aggregation (Carrier Aggregation, CA) scenario, when a secondary component carrier is configured for UE, both a carrier index of the secondary component carrier and a cell identify (Cell Identify, Cell ID) of a secondary cell working on the secondary component carrier are carried. In this case, it may be considered that the concept of carrier is equivalent to the concept of cell. For example, that the UE accesses a carrier is the same as that the UE accesses a cell.

To satisfy a low latency requirement of a service such as a URLLC service, grant-free (grant-free) transmission is introduced in an NR system. In uplink transmission, the grant-free transmission may save a process of decoding scheduling information. In the embodiments of this application, the grant-free transmission may be understood as any one or more of the following meanings, or a combination of some technical features in a plurality of meanings, or other similar meanings.

The grant-free transmission may mean that a network device pre-allocates a plurality of transmission resources, and notifies a terminal device of the plurality of transmission resources; when needing to transmit uplink data, the terminal device selects at least one transmission resource from the plurality of transmission resources pre-allocated by the network device, and sends the uplink data by using the selected transmission resource; and the network device detects, on one or more transmission resources in the plurality of pre-allocated transmission resources, the uplink data sent by the terminal device. The detection may be blind detection, detection performed based on a control field in the uplink data, or detection performed in another manner. The detection manner is not limited in this application.

The grant-free transmission may mean that a network device pre-allocates a plurality of transmission resources, and notifies a terminal device of the plurality of transmission resources, so that when needing to transmit uplink data, the terminal device selects at least one transmission resource from the plurality of transmission resources pre-allocated by the network device, and sends the uplink data by using the selected transmission resource.

The grant-free transmission may mean obtaining information about a plurality of pre-allocated transmission resources, selecting at least one transmission resource from the plurality of transmission resources when there is an uplink data transmission requirement, and sending uplink data by using the selected transmission resource. An obtaining manner may be obtaining from a network device or obtaining in a predefined manner.

The grant-free transmission may refer to a method in which uplink data of a terminal device can be transmitted without dynamic scheduling performed by a network device. The dynamic scheduling may be a scheduling mode in which the network device indicates a transmission resource for each uplink data transmission of the terminal device by using signaling. Optionally, implementation of the uplink data transmission of the terminal device may be understood as that uplink data transmission of data of two or more terminal devices is allowed to be performed on a same time-frequency resource. Optionally, the transmission resource may be a transmission resource of one or more time domain resources after a moment at which the terminal device receives the signaling.

The grant-free transmission may mean that a terminal device performs uplink data transmission without a grant from a network device. The grant may mean that the terminal device sends an uplink scheduling request to the network device; and after receiving the scheduling request, the network device sends an uplink grant to the terminal device, where the uplink grant indicates an uplink transmission resource allocated to the terminal device.

The grant-free transmission may refer to a contention-based transmission mode, and may specifically mean that a plurality of terminals simultaneously transmit uplink data on a same pre-allocated time-frequency resource without granting by a base station.

Higher layer signaling may be signaling sent by a higher-layer protocol layer. The higher-layer protocol layer is at least one of all protocol layers above a physical layer. The higher-layer protocol layer may be specifically at least one of the following protocol layers: a medium access control (Medium Access Control, MAC) layer, a radio link control (Radio Link Control, RLC) layer, a packet data convergence protocol (Packet Data Convergence Protocol, PDCP) layer, a radio resource control (Radio Resource Control, RRC) layer, and a non-access stratum (Non Access Stratum, NAS).

A method and an apparatus provided in the embodiments of this application may be applied to a terminal device or a network device. The terminal device or the network device includes a hardware layer, an operating system layer running on the hardware layer, and an application layer running on the operating system layer. The hardware layer includes hardware such as a central processing unit (Central Processing Unit, CPU), a memory management unit (Memory Management Unit, MMU), and a memory (also referred to as a main memory). The operating system may be any one or more of types of computer operating systems, for example, a Linux operating system, a Unix operating system, an Android operating system, an iOS operating system, or a Windows operating system, that implement service processing by using a process (Process). The application layer includes applications such as a browser, an address book, word processing software, and instant messaging software. In addition, a specific structure of an execution body of the method provided in the embodiments of this application is not specifically limited in the embodiments of this application, provided that a program that records code of the method provided in the embodiments of this application can be run to perform communication according to the method provided in the embodiments of this application. For example, the method provided in the embodiments of this application may be performed by a terminal device or a functional module that is in a terminal device and that can invoke and execute the program.

In addition, aspects or features in the embodiments of this application may be implemented as a method, an apparatus, or a product that uses standard programming and/or engineering technologies. The term "product" used in this application covers a computer program that can be accessed from any computer-readable component, carrier, or medium. For example, a computer-readable medium may include but is not limited to: a magnetic storage component (for example, a hard disk, a floppy disk, or a magnetic tape), an optical disc (for example, a compact disc (Compact Disc, CD), a digital versatile disc (Digital Versatile Disc, DVD), a smart card, or a flash memory component (for example, an erasable programmable read-only memory (Erasable Programmable Read-Only Memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, include, and/or transmit an instruction and/or data.

It should be understood that the term "and/or" in this specification describes only an association relationship for describing associated objects and represents that three relationships may exist. For example, A and/or B may represent the following three cases: Only A exists, both A and B exist, and only B exists.

It should be understood that for the term "not in X" used in this specification, "in X" includes any moment of X, a start moment of X, and an end moment of X. "Not in X" may indicate that not in any moment of X, or may indicate that not in one or more of moments in X. This is not limited in this application.

The term "time domain resource" used in this specification is generally a first time domain resource, a second time domain resource, a third time domain resource, and the like.

FIG. 2 is a flowchart of a method for initiating a random access process according to an embodiment of this application. As shown in FIG. 2, the method in this embodiment includes the following steps.

S201. Determine that a first time interval is greater than or equal to a first time threshold, and there is no available UL-SCH resource in a first time domain resource, where the first time interval is a time interval between a first moment of the first time domain resource and a second moment of a second time domain resource, and the second time domain resource is a time domain resource in which a grant-free UL-SCH resource is located.

S202. Initiate a random access process.

In a first example, it is assumed that a time domain resource is a TTI. If there is no available UL-SCH resource in a current TTI, a MAC entity has no valid PUCCH resource configured for a scheduling request in any TTI, and an uplink transmit timing difference between the current TTI and a TTI in which the grant-free UL-SCH resource is located is greater than or equal to the first time threshold, a terminal device initiates the random access process in a cell. Further, the terminal device cancels all scheduling requests in a queue.

In a second example, it is assumed that a time domain resource is a TTI, and the first time threshold is T1. If there is no available UL-SCH resource in a TTI whose index number is n, and there is no available UL-SCH resource in TTIs whose index numbers are n to n+Tl; and in any TTI, a MAC entity has no valid PUCCH resource configured for a scheduling request, a terminal device initiates the random access process in a cell. Further, the terminal device cancels all scheduling requests in a queue.

In a third example, it is assumed that a time domain resource is a TTI, and the first time threshold is T1. If there is no available UL-SCH resource in a TTI whose index number is n, and after the TTI whose index number is n, when an index number of a TTI in which the grant-free UL-SCH resource is located is less than or equal to n+T1, the UL-SCH resource is set to be available for transmission, and a terminal device initiates the random access process in a cell. Further, the terminal device cancels all scheduling requests in a queue.

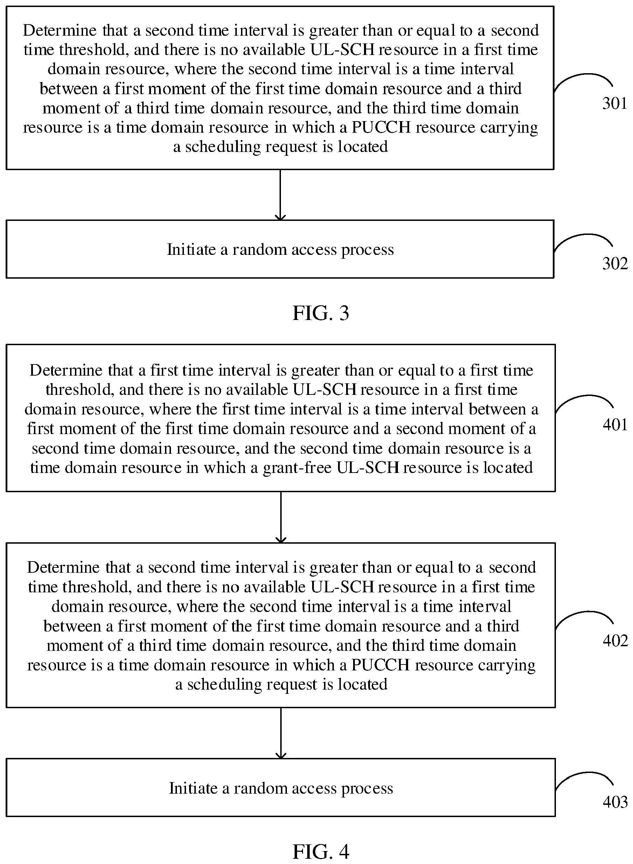

FIG. 3 is a flowchart of a method for initiating a random access process according to another embodiment of this application. As shown in FIG. 3, the method in this embodiment includes the following steps.

S301. Determine that a second time interval is greater than or equal to a second time threshold, and there is no available UL-SCH resource in a first time domain resource, where the second time interval is a time interval between a first moment of the first time domain resource and a third moment of a third time domain resource, and the third time domain resource is a time domain resource in which a PUCCH resource carrying a scheduling request is located.

S302. Initiate a random access process.

For example, it is assumed that a time domain resource is a TTI, and the second time threshold is T2. If there is no available UL-SCH resource in a TTI whose index number is n, or if before a TTI whose index number is n+T2, a MAC entity has no valid PUCCH resource configured for a scheduling request, a terminal device initiates the random access process in a cell. Further, the terminal device cancels all scheduling requests in a queue.

FIG. 4 is a flowchart of a method for initiating a random access process according to still another embodiment of this application. As shown in FIG. 4, the method in this embodiment includes the following steps.

S401. Determine that a first time interval is greater than or equal to a first time threshold, and there is no available UL-SCH resource in a first time domain resource, where the first time interval is a time interval between a first moment of the first time domain resource and a second moment of a second time domain resource, and the second time domain resource is a time domain resource in which a grant-free UL-SCH resource is located.

S402. Determine that a second time interval is greater than or equal to a second time threshold, and there is no available UL-SCH resource in a first time domain resource, where the second time interval is a time interval between a first moment of the first time domain resource and a third moment of a third time domain resource, and the third time domain resource is a time domain resource in which a PUCCH resource carrying a scheduling request is located.

S403. Initiate a random access process.

The following explanations and descriptions are applicable to all the embodiments shown in FIG. 2, FIG. 3, and FIG. 4.

In the foregoing embodiments, the UL-SCH resource may include a scheduled UL-SCH resource and/or a grant-free UL-SCH resource. For ease of understanding, a person skilled in the art may understand the first time domain resource as a TTI, but this is not limited in this application. It should be understood that the first time domain resource may have a specific time domain resource length, a specific TTI length, or specific transmission duration. A unit of a time domain resource in the embodiments of this application may include any time length unit such as a symbol, a microsecond, a millisecond, a second, a slot, a mini-slot, or a subframe. For example, a length of a time domain resource may be 1 ms, 2 ms, 3 ms, 0.125 ms, 0.5 ms, 0.375 ms, 0.25 ms, 0.0625 ms, one symbol, two symbols, three symbols, four symbols, five symbols, or six symbols, seven symbols, 14 symbols, or 21 symbols. A length of a time domain resource may be a maximum length of the time domain resource or a minimum length of the time domain resource.

The first time threshold and the second time threshold may be determined in a plurality of manners. For example:

In a first manner, the first time threshold and/or the second time threshold are/is determined through configuration by using higher layer signaling.

In a second manner, the first time threshold and/or the second time threshold is determined in a system or a protocol in a predefined manner.

In a third manner, the first time threshold and/or the second time threshold are/is determined through notification by using physical layer signaling. For example, the physical layer signaling is downlink control information (Downlink control information, DCI) or uplink control information (Uplink control information, UCI).

Optionally, a relationship between the first moment, the second moment, and the third moment may be any one of the following correspondences:
the first moment is a start moment of the first time domain resource, the second moment is a start moment of the second time domain resource, and the third moment is a start moment of the third time domain resource;
the first moment is a start moment of the first time domain resource, the second moment is a start moment of the second time domain resource, and the third moment is an end moment of the third time domain resource;
the first moment is a start moment of the first time domain resource, the second moment is an end moment of the second time domain resource, and the third moment is a start moment of the third time domain resource;
the first moment is a start moment of the first time domain resource, the second moment is an end moment of the second time domain resource, and the third moment is an end moment of the third time domain resource;
the first moment is an end moment of the first time domain resource, the second moment is a start moment of the second time domain resource, and the third moment is a start moment of the third time domain resource;
the first moment is an end moment of the first time domain resource, the second moment is a start moment of the second time domain resource, and the third moment is an end moment of the third time domain resource;
the first moment is an end moment of the first time domain resource, the second moment is an end moment of the second time domain resource, and the third moment is a start moment of the third time domain resource; and
the first moment is an end moment of the first time domain resource, the second moment is an end moment of the second time domain resource, and the third moment is an end moment of the third time domain resource.

With reference to the foregoing correspondences, an example in which the first moment is the start moment of the first time domain resource, the second moment is the start moment of the second time domain resource, and the third moment is the start moment of the third time domain resource is used to explain the first time interval and the second time interval. The first time interval is a time interval between the start moment of the first time domain resource and the start moment of the second time domain resource, and the second time interval is a time interval between the start moment of the first time domain resource and the start moment of the third time domain resource. For moments of other correspondences, refer to the example, and details are not described herein again.

Optionally, a relationship between the first moment and the second moment may be any one of the following correspondences:
the first moment is a start moment of the first time domain resource, and the second moment is a start moment of the second time domain resource;
the first moment is a start moment of the first time domain resource, and the second moment is an end moment of the second time domain resource;
the first moment is an end moment of the first time domain resource, and the second moment is a start moment of the second time domain resource; and
the first moment is an end moment of the first time domain resource, and the second moment is an end moment of the second time domain resource.

Optionally, a relationship between the first moment and the third moment may be any one of the following correspondences:
the first moment is a start moment of the first time domain resource, and the third moment is a start moment of the third time domain resource;
the first moment is a start moment of the first time domain resource, and the third moment is an end moment of the third time domain resource;
the first moment is an end moment of the first time domain resource, and the third moment is a start moment of the third time domain resource; and
the first moment is an end moment of the first time domain resource, and the third moment is an end moment of the third time domain resource.

It should be noted that in the embodiments of this application, the method for initiating a random access process may be performed by a terminal device, but is not limited to the terminal device. For example, the method for initiating a random access process may be performed by a network device or another electronic device. For example, optionally, the initiating a random access process may include: initiating, by the terminal device, the random access process on the first time domain resource. Further, the terminal device initiates a random access process on a K^{th} time domain resource after the first time domain resource, where K is a positive integer greater than or equal to 1.

Referring to FIG. 2, when determining that the first time interval is greater than or equal to the first time threshold, and there is no available UL-SCH resource in the first time domain resource, the terminal device initiates the random access process.

However, in the prior art, if the terminal device determines that in a current TTI, there is no UL-SCH resource, and no PUCCH resource carrying a scheduling request is configured, the terminal device initiates a random access process. In this case, the terminal device may not be out of synchronization with a network device, to be specific, the terminal device and the network device may still normally transmit data. Therefore, the prior art has at least the following disadvantages:
1. An excessively long time required by a contention-based random access process causes an increase in an uplink data transmission latency.
2. The terminal device may simultaneously send uplink data on a physical random access channel (Physical Random Access Channel, PRACH) and a grant-free transmission resource in a same time period. Consequently, an increase in an uplink data transmission latency may be caused because the random access process affects transmission of the uplink data on the grant-free transmission resource.

However, in this embodiment, when there is no available UL-SCH resource in the first time domain resource, a relationship between the first time interval and the first time threshold is further determined, to be specific, the first time interval is greater than or equal to the first time threshold. When both the two conditions are satisfied, the random access process is initiated. In other words, if the first time interval is less than the first time threshold, the terminal device does not initiate the random access process, so that when no PUCCH resource carrying a scheduling request is configured, sending of grant-free uplink transmission by the terminal device is prevented from being affected because the terminal device is prevented from frequently initiating a random access process. In this embodiment, a probability of initiating a random access process is reduced by limiting the first time threshold, to reduce a transmission latency of grant-free uplink data, and satisfy a service requirement of a service having a low latency requirement.

In the embodiment shown in FIG. 2, when the terminal device determines that the terminal device is to have a grant-free transmission opportunity, grant-free transmission may not be affected because the terminal device is prevented from initiating a random access process, so that system resource utilization efficiency is improved and an uplink data transmission latency is reduced.

Referring to FIG. 3, when determining that the second time interval is greater than or equal to the second time threshold, and there is no available UL-SCH resource in the first time domain resource, the terminal device initiates the random access process.

In the prior art, if the terminal device determines that in a current TTI, there is no UL-SCH resource, and no PUCCH resource used to carry a scheduling request, where a PUCCH resource carrying a scheduling request is configured, but is unavailable, in this case, the terminal device initiates a random access process. However, in this case, the terminal device needs to wait for a PUCCH resource used to carry a scheduling request. In this waiting process, the terminal device does not initiate a random access process. Based on the prior art, when a period of the PUCCH resource used to carry the scheduling request is relatively long, the uplink data needs to wait for a relatively long time, causing an increase in an uplink data transmission latency.

However, in the embodiment shown in FIG. 3, when there is no available UL-SCH resource in the first time domain resource, a relationship between the second time interval and the second time threshold is further determined, to be specific, the second time interval is greater than or equal to the second time threshold. When both the two conditions are satisfied, the random access process is initiated. In other words, if the second time interval is less than the second time threshold, the terminal device does not initiate the random access process. Therefore, when the PUCCH resource carrying the scheduling request is configured, to prevent the terminal device from waiting for a long time, the random access process is not initiated, and consequently, an uplink transmission latency of the terminal device is increased. In this embodiment, a probability of initiating a random access process is increased by adding a condition in which the second time interval is greater than or equal to the second time threshold, to reduce an uplink data transmission latency and satisfy a service requirement of a service having a low latency requirement. It may be understood that in a specific implementation, the second time threshold is less than the period of the PUCCH resource used to carry the scheduling request.

In the embodiment shown in FIG. 3, when determining that there is no PUCCH resource used for a scheduling request in the second time interval, the terminal device may initiate the random access process, to improve system resource utilization efficiency and reduce an uplink data transmission waiting latency.

The embodiment shown in FIG. 4 comprehensively considers disadvantages existing in the prior art, and has technical effects of the embodiment shown in FIG. 2 and the embodiment shown in FIG. 3. For detailed descriptions, refer to the foregoing embodiments, and details are not described herein again.

Based on the embodiment shown in FIG. 2 or FIG. 4, in a specific implementation, the second time domain resource is an A^{th} time domain resource that is after the first time domain resource and in which the grant-free UL-SCH resource is located, and A is a positive integer greater than or equal to 1.

It should be understood that the second time domain resource may be one or more time domain resources. Time intervals between i1 second time domain resources and the first time domain resource are greater than or equal to the first time threshold, and time intervals between j 1 second time domain resources and the first time domain resource are less than the first time threshold, where both i1 and j1 are integers greater than or equal to 0. When both i1 and j1 are greater than or equal to 1, to be specific, there is a second time domain resource greater than or equal to the first time threshold, and there is a second time domain resource less than the first time threshold, the terminal device initiates the random access process according to the embodiment shown in FIG. 2 or FIG. 4. However, when there is a second time domain resource less than the first time threshold, the terminal device should determine that the terminal device is to have a grant-free transmission opportunity, so that the terminal device can be prevented from initiating a random access process. Therefore, when the second time domain resource is the A^{th} time domain resource that is after the first time domain resource and in which the grant-free UL-SCH resource is located, the terminal device may determine, by using the A^{th} time domain resource, that the terminal device is to have a grant-free transmission opportunity, so that grant-free transmission may not be affected because the terminal device is prevented from initiating a random access process, thereby improving the system resource utilization efficiency and reducing the uplink data transmission latency.

Optionally, when determining that there is no grant-free UL-SCH resource in the first time interval, the terminal device may initiate the random access process.

Optionally, when determining that there is no UL-SCH resource scheduled in the first time interval, the terminal device may initiate the random access process.

Based on the embodiment shown in FIG. 3 or FIG. 4, in a specific implementation, the third time domain resource is a B^{th} time domain resource that is after the first time domain resource and in which the PUCCH resource carrying the scheduling request is located, and B is a positive integer greater than or equal to 1.

It should be understood that the third time domain resource may be one or more time domain resources. Time intervals between i2 third time domain resources and the first time domain resource are greater than or equal to the second time threshold, and time intervals between j2 third time domain resources and the first time domain resource are less than the second time threshold, where both i2 and j2 are integers greater than or equal to 0. When both i2 and j2 are greater than or equal to 1, to be specific, there is a third time domain resource greater than or equal to the second time threshold, and there is a third time domain resource less than the second time threshold, the terminal device initiates the random access process according to the embodiment shown in FIG. 2 or FIG. 4. However, when there is a third time domain resource less than the second time threshold, the terminal device determines that there is no PUCCH transmission opportunity for the terminal device, and the terminal device should initiate the random access process. Therefore, when the third time domain resource is the B^{th} time domain resource that is after the first time domain resource and in which the PUCCH resource carrying the scheduling request is located, the terminal device may determine, by using the B^{th} time domain resource, that there is no PUCCH transmission opportunity for the terminal device, and the terminal device should initiate the random access process, to increase a probability of initiating a random access process, thereby reducing the uplink data transmission latency, and satisfying the service requirement of the service having the low latency requirement.

Optionally, when determining that there is no PUCCH resource used for a scheduling request in the second time interval, the terminal device may initiate the random access process.

Optionally, when determining that there is no PUCCH resource used for a scheduling request in the second time interval, the terminal device may initiate the random access process.

Next, other possible embodiments of this application are described based on the embodiment shown in FIG. 2, and the embodiments shown in FIG. 3 and FIG. 4 are similar.

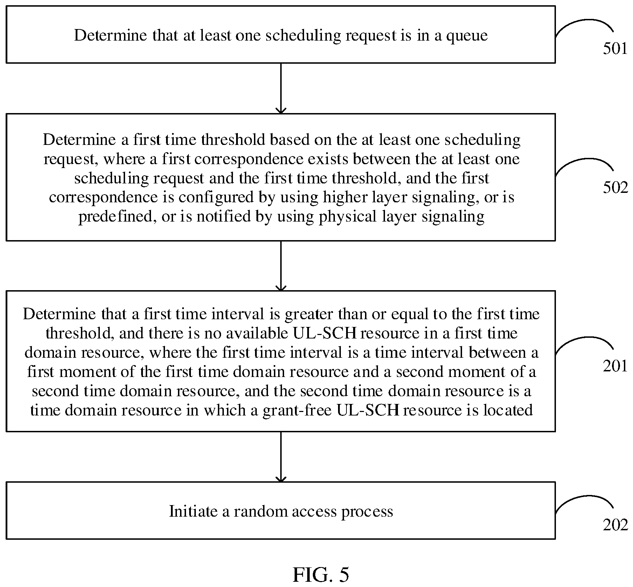

FIG. 5 is a flowchart of a method for initiating a random access process according to yet another embodiment of this application. As shown in FIG. 5, based on the procedure shown in FIG. 2, the method in this embodiment may further include the following steps.

S501. Determine that at least one scheduling request is in a queue.

Further, the method for initiating a random access process may further include:
S502. Determine the first time threshold based on the at least one scheduling request, where a first correspondence exists between the at least one scheduling request and the first time threshold, and the first correspondence is configured by using higher layer signaling, or is predefined, or is notified by using physical layer signaling.

Specifically, the higher layer signaling may be higher layer signaling sent by the network device; or the higher layer signaling is higher layer signaling of the terminal device. In addition, the first correspondence may alternatively be determined based on physical layer signaling sent by the network device, or the like. This is not limited in this embodiment of this application.

In this embodiment, a first correspondence exists between a scheduling request and a first time threshold. The terminal device may correspondingly obtain different first time thresholds based on different scheduling requests. For example, a relatively small first time threshold may be set for a scheduling request that is urgent or has a relatively high priority.

For example, the terminal device determines, based on a scheduling request corresponding to a relatively large subcarrier spacing, that a first time threshold is a, and the terminal device determines, based on a scheduling request corresponding to a relatively small subcarrier spacing, that a first time threshold is b, where a is less than or equal to b. For another example, the terminal device determines, based on a scheduling request corresponding to a short TTI, that a first time threshold is c, and the terminal device determines, based on a scheduling request corresponding to a long TTI, that the first time threshold is d, where c is less than or equal to d.

If the embodiment shown in FIG. 3 is used as a basis, this step is replaced with: determining the second time threshold based on the at least one scheduling request, where a second correspondence exists between the at least one scheduling request and the second time threshold, and the second correspondence is configured by using higher layer signaling, or is predefined, or is notified by using physical layer signaling. In addition, the foregoing descriptions of the first time threshold and the higher layer signaling are also correspondingly applicable to the second time threshold and the higher layer signaling in this embodiment. Details are not described herein again.

The first correspondence and the second correspondence may be determined in a plurality of manners. For example:
In a first manner, the first correspondence and/or the second correspondence are/is determined through configuration by using higher layer signaling.
In a second manner, the first correspondence and/or the second correspondence is determined in a system or a protocol in a predefined manner.
In a third manner, the first correspondence and/or the second correspondence are/is determined through notification by using physical layer signaling. For example, the physical layer signaling is DCI or UCI.

Further, the at least one scheduling request is a scheduling request corresponding to a first logical channel set. A logical channel in the first logical channel set corresponds to a first subcarrier spacing and/or a first time length and/or a first service. The first service may include an enhanced mobile broadband (enhanced Mobile Broadband, eMBB) service and/or a massive machine type communication (Massive Machine Type Communication, mMTC) service, and/or another service. Scheduling requests are distinguished herein. For example, when a logical channel in the first logical channel set corresponds to a URLLC service, because the random access process cannot satisfy a low latency requirement of the first URLLC service, the terminal device does not initiate the random access process. It may be understood that the first service does not include the first URLLC service, but includes only the eMBB service and/or the mMTC service, and/or a URLLC service that satisfies a latency requirement. It should be understood that the URLLC service may correspond to different latency requirements, for example, a requirement for a latency of 1 ms and a requirement for a latency of 10 ms.

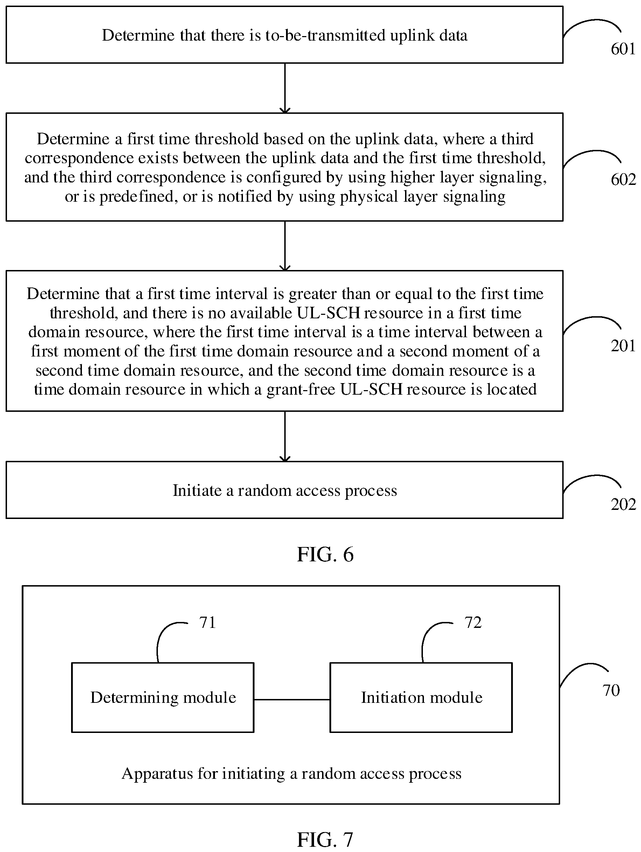

FIG. 6 is a flowchart of a method for initiating a random access process according to still yet another embodiment of this application. As shown in FIG. 6, based on the procedure shown in FIG. 2, the method in this embodiment may further include the following steps.

S601. Determine that there is to-be-transmitted uplink data.

In a feasible implementation, this step may be replaced with: determining uplink data corresponding to a second logical channel set, where a logical channel in the second logical channel set corresponds to a second subcarrier spacing and/or a second time length and/or a second service.

Further, the method for initiating a random access process may further include:
S602. Determine the first time threshold based on the uplink data, where a third correspondence exists between the uplink data and the first time threshold, and the third correspondence is configured by using higher layer signaling, or is predefined, or is notified by using physical layer signaling.

Explanations of the first time threshold and the higher layer signaling are described above.

In this embodiment, a third correspondence exists between uplink data and a first time threshold. The terminal device may correspondingly obtain different first time thresholds based on different uplink data. For example, a relatively small first time threshold may be set for uplink data that is urgent or has a relatively high priority. For example, the third correspondence includes: A first transport block corresponds to a first time threshold c, and a second transport block corresponds to a first time threshold d, where the first time threshold c is different from the first time threshold d. The terminal device may determine the first time threshold based on the transport block and the third correspondence.

Alternatively, based on the procedure shown in FIG. 2, the method in this embodiment may further include: determining uplink data corresponding to a second logical channel set, where a logical channel in the second logical channel set corresponds to a second subcarrier spacing and/or a second time length and/or a second service; and determining the first time threshold based on the second logical channel set, where a fourth correspondence exists between the second logical channel set and the first time threshold, and the fourth correspondence is configured by using higher layer signaling, or is predefined, or is notified by using physical layer signaling.

In this embodiment, a fourth correspondence exists between a second logical channel set and a first time threshold. The terminal device may correspondingly obtain different first time thresholds based on different second logical channel sets. For example, a relatively small first time threshold may be set for a second logical channel set that is urgent or has a relatively high priority. For example, the fourth correspondence includes: A second logical channel set C corresponds to a first time threshold e, and a second logical channel set D corresponds to a first time threshold f, where the first time threshold e is different from the first time threshold f. The terminal device may determine the first time threshold based on the second logical channel set and the fourth correspondence.

If the embodiment shown in FIG. 3 is used as a basis, the method for initiating a random access process may further be implemented by using the following embodiments:
In a first embodiment, the method for initiating a random access process may further include: determining that there is to-be-transmitted uplink data; determining the second time threshold based on the uplink data, where a fifth correspondence exists between the uplink data and the second time threshold, and the fifth correspondence is configured by using higher layer signaling, or is predefined, or is notified by using physical layer signaling.
In a second embodiment, the method for initiating a random access process may further include: determining uplink data corresponding to a second logical channel set, where a logical channel in the second logical channel set corresponds to a second subcarrier spacing and/or a second time length and/or a second service; and determining the second time threshold based on the uplink data, where a fifth correspondence exists between the uplink data and the second time threshold, and the fifth correspondence is configured by using higher layer signaling, or is predefined, or is notified by using physical layer signaling.
In a third embodiment, the method for initiating a random access process may further include: determining uplink data corresponding to a second logical channel set, where a logical channel in the second logical channel set corresponds to a second subcarrier spacing and/or a second time length and/or a second service; and determining the second time threshold based on the second logical channel set, where a sixth correspondence exists between the second logical channel set and the second time threshold, and the sixth correspondence is configured by using higher layer signaling, or is predefined, or is notified by using physical layer signaling.

In addition, the foregoing descriptions of the first time threshold and the higher layer signaling are also correspondingly applicable to the second time threshold and the higher layer signaling in this embodiment. Details are not described herein again.

The third correspondence, the fourth correspondence, the fifth correspondence, and the sixth correspondence may be determined in a plurality of manners. For example:
In a first manner, the fourth correspondence, the fifth correspondence, and the sixth correspondence are determined through configuration by using higher layer signaling.
In a second manner, the fourth correspondence, the fifth correspondence, and the sixth correspondence are determined in a system or a protocol in a predefined manner.
In a third manner, the fourth correspondence, the fifth correspondence, and the sixth correspondence are determined through notification by using physical layer signaling. For example, the physical layer signaling is DCI or UCI.

It should be further noted that the uplink data is uplink data corresponding to a third service, and the third service may specifically be a service, such as a URLLC service, having a low latency requirement.

Further, a length of the first time domain resource is less than or equal to a third time length. The third time length is less than or equal to the first time length. In this embodiment, a minimum time granularity for the terminal device to initiate the random access process is limited, to prevent the terminal device from performing the step of determining whether to initiate the random access process shown in FIG. 2. It may be understood that, when the length of the first time domain resource is greater than the third time length, the terminal device does not need to determine whether to initiate the random access process, or the terminal device determines that no random access process needs to be initiated.

It should be additionally noted that a length of the second time domain resource is less than or equal to a fourth time length; and/or a subcarrier spacing of a frequency domain resource in which a grant-free UL-SCH resource is located is greater than or equal to a third subcarrier spacing. The fourth time length is less than or equal to the second time length, and the third subcarrier spacing is greater than or equal to the second subcarrier spacing. Herein, a maximum subcarrier spacing granularity and/or a minimum time granularity for the terminal device to initiate the random access process is limited, to avoid a case in which even if the terminal device waits for a grant-free UL-SCH resource, the terminal device cannot successfully send information on the UL-SCH resource. It may be understood that, when the length of the second time domain resource is greater than the fourth time length, and/or the subcarrier spacing of the frequency domain resource in which the grant-free UL-SCH resource is located is less than the third subcarrier spacing, the terminal device does not need to determine whether to initiate the random access process, or the terminal device determines that no random access process needs to be initiated.

A length of the third time domain resource is less than or equal to a fifth time length; and/or a subcarrier spacing of a frequency domain resource in which a PUCCH resource carrying a scheduling request is located is greater than or equal to a fourth subcarrier spacing. The fifth time length is less than or equal to the second time length, and the fourth subcarrier spacing is greater than or equal to the second subcarrier spacing. Herein, a maximum subcarrier spacing granularity and/or a minimum time granularity for the terminal device to initiate the random access process is limited, to avoid a case in which the terminal device cannot successfully send the random access process even if the terminal device waits for a PUCCH resource carrying a scheduling request. It may be understood that when the length of the third time domain resource is greater than the fifth time length, and/or the subcarrier spacing of the frequency domain resource on which the PUCCH resource carrying the scheduling request is located is less than the fourth subcarrier spacing, the terminal device does not need to determine whether to initiate the random access process, or the terminal device determines that no random access process needs to be initiated.

FIG. 7 is a schematic structural diagram of an apparatus 70 for initiating a random access process according to an embodiment of this application. As shown in FIG. 7, the apparatus 70 for initiating a random access process includes a determining module 71 and an initiation module 72.

The determining module 71 is configured to: determine that a first time interval is greater than or equal to a first time threshold, and there is no available UL-SCH resource in a first time domain resource, where the first time interval is a time interval between a first moment of the first time domain resource and a second moment of a second time domain resource, and the second time domain resource is a time domain resource in which a grant-free UL-SCH resource is located; and/or determine that a second time interval is greater than or equal to a second time threshold, and there is no available UL-SCH resource in a first time domain resource, where the second time interval is a time interval between a first moment of the first time domain resource and a third moment of a third time domain resource, and the third time domain resource is a time domain resource in which a PUCCH resource carrying a scheduling request is located.

The initiation module 72 is configured to initiate a random access process.

Optionally, the second time domain resource is an A^{th} time domain resource that is after the first time domain resource and in which the grant-free UL-SCH resource is located, and A is a positive integer greater than or equal to 1; and/or the third time domain resource is a B^{th} time domain resource that is after the first time domain resource and in which the PUCCH resource carrying the scheduling request is located, and B is a positive integer greater than or equal to 1.

Optionally, a relationship between the first moment, the second moment, and the third moment is any one of the following correspondences:
the first moment is a start moment of the first time domain resource, the second moment is a start moment of the second time domain resource, and the third moment is a start moment of the third time domain resource;
the first moment is a start moment of the first time domain resource, the second moment is an end moment of the second time domain resource, and the third moment is an end moment of the third time domain resource;
the first moment is an end moment of the first time domain resource, the second moment is a start moment of the second time domain resource, and the third moment is a start moment of the third time domain resource; and
the first moment is an end moment of the first time domain resource, the second moment is an end moment of the second time domain resource, and the third moment is an end moment of the third time domain resource.

In an implementation, the determining module 71 may further be configured to determine that at least one scheduling request is in a queue.

Further, the determining module 71 may further be configured to: after it is determined that the at least one scheduling request is in the queue, determine the first time threshold based on the at least one scheduling request, where a first correspondence exists between the at least one scheduling request and the first time threshold, and the first correspondence is configured by using higher layer signaling, or is predefined, or is notified by using physical layer signaling; and/or after it is determined that the at least one scheduling request is in the queue, determine the second time threshold based on the at least one scheduling request, where a second correspondence exists between the at least one scheduling request and the second time threshold, and the second correspondence is configured by using higher layer signaling, or is predefined, or is notified by using physical layer signaling.

Optionally, the at least one scheduling request is a scheduling request corresponding to a first logical channel set, and a logical channel in the first logical channel set corresponds to a first subcarrier spacing and/or a first time length and/or a first service.

In another implementation, the determining module 71 is further configured to: determine that there is to-be-transmitted uplink data; or determine uplink data corresponding to a second logical channel set, where a logical channel in the second logical channel set corresponds to a second subcarrier spacing and/or a second time length and/or a second service.

On the foregoing basis, the determining module 71 is further configured to: determine the first time threshold based on the uplink data, where a third correspondence exists between the uplink data and the first time threshold, and the third correspondence is configured by using higher layer signaling, or is predefined, or is notified by using physical layer signaling; or determine the first time threshold based on the second logical channel set, where a fourth correspondence exists between the second logical channel set and the first time threshold, and the fourth correspondence is configured by using higher layer signaling, or is predefined, or is notified by using physical layer signaling.

Still further, the determining module 71 is further configured to: determine the second time threshold based on the uplink data, where a fifth correspondence exists between the uplink data and the second time threshold, and the fifth correspondence is configured by using higher layer signaling, or is predefined, or is notified by using physical layer signaling; or determine the second time threshold based on the second logical channel set, where a sixth correspondence exists between the second logical channel set and the second time threshold, and the sixth correspondence is configured by using higher layer signaling, or is predefined, or is notified by using physical layer signaling.

The uplink data is uplink data corresponding to a third service, and the third service is a URLLC service or the like.

Optionally, a length of the first time domain resource is less than or equal to a third time length.

Optionally, a length of the second time domain resource is less than or equal to a fourth time length; and/or a subcarrier spacing of a frequency domain resource in which a grant-free UL-SCH resource is located is greater than or equal to a third subcarrier spacing.

Optionally, a length of the third time domain resource is less than or equal to a fifth time length; and/or a subcarrier spacing of a frequency domain resource in which a PUCCH resource carrying a scheduling request is located is greater than or equal to a fourth subcarrier spacing.

The apparatus described above in this embodiment may be configured to perform the technical solutions performed by the terminal device or a chip inside the terminal device in the foregoing method embodiments. An implementation principle and a technical effect of this embodiment are similar to those of the foregoing method embodiments. For functions of the modules, refer to corresponding descriptions in the method embodiments, and details are not described herein again.

It should be noted that, in this embodiment of this application, module division is an example, and is merely a logical function division. In actual implementations, another division manner may be used. Functional modules in the embodiments of this application may be integrated into one processing module, or each of the modules may exist alone physically, or two or more modules may be integrated into one module. The integrated module may be implemented in a form of hardware, or may be implemented in a form of a software functional module.

When the integrated module is implemented in the form of a software functional module and sold or used as an independent product, the integrated unit may be stored in a computer-readable storage medium. Based on such understanding, the technical solutions of this application essentially, or the part contributing to the prior art, or all or some of the technical solutions may be implemented in the form of a software product. The software product is stored in a storage medium and includes several instructions for instructing a computer device (which may be a personal computer, a server, a network device, or the like) or a processor (processor) to perform all or some of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, the procedure or functions according to the embodiments of this application are all or partially generated. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Disk, SSD)), or the like.

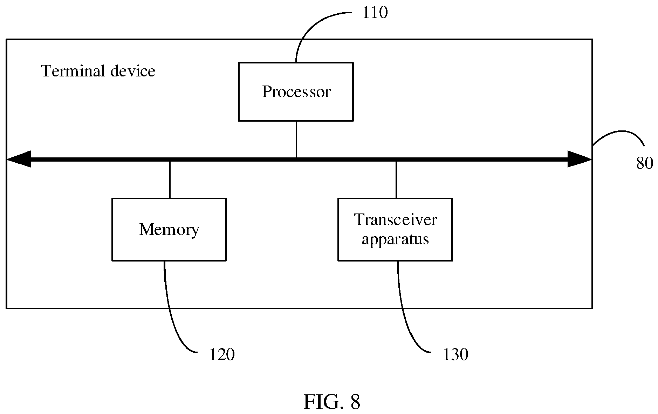

FIG. 8 is a schematic structural diagram of a terminal device 80 according to an embodiment of this application. Referring to FIG. 8, the terminal device 80 includes a processor 110, a memory 120, and a transceiver apparatus 130. The transceiver apparatus 130 may be connected to an antenna. In a downlink direction, the transceiver apparatus 130 receives, by using the antenna, information sent by a network device, and sends the information to the processor 110 for processing. In an uplink direction, the processor 110 processes data of the terminal device 80, and sends the data to the network device by using the transceiver apparatus 130.

The memory 120 is configured to store a program for implementing the modules in the foregoing method embodiments, and the processor 110 invokes the program to perform operations in the foregoing method embodiments.

This application further provides a storage medium, including a readable storage medium and a computer program. The computer program is configured to implement the method for initiating a random access process provided in any one of the foregoing embodiments.

This application further provides a program product, where the program product includes a computer program (that is, an executable instruction), and the computer program is stored in a readable storage medium. At least one processor of an apparatus for initiating a random access process may read the computer program from the readable storage medium, and the at least one processor executes the computer program, so that the apparatus for initiating a random access process implements the method for initiating a random access process provided in the foregoing implementations.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A method for initiating a random access process, comprising:
determining that a first time interval is greater than or equal to a first time threshold, and there is no available uplink shared channel UL-SCH resource in a first time domain resource, wherein the first time interval is a time interval between a first moment of the first time domain resource and a second moment of a second time domain resource, and the second time domain resource is a time domain resource in which a grant-free UL-SCH resource is located; and/or determining that a second time interval is greater than or equal to a second time threshold, and there is no available UL-SCH resource in a first time domain resource, wherein the second time interval is a time interval between a first moment of the first time domain resource and a third moment of a third time domain resource, and the third time domain resource is a time domain resource in which a physical uplink control channel PUCCH resource carrying a scheduling request is located; and
initiating a random access process.

2. The method according to claim 1, wherein the second time domain resource is an A^{th} time domain resource that is after the first time domain resource and in which the grant-free UL-SCH resource is located, and A is a positive integer greater than or equal to 1; and/or
the third time domain resource is a B^{th} time domain resource that is after the first time domain resource and in which the PUCCH resource carrying the scheduling request is located, and B is a positive integer greater than or equal to 1.

3. The method according to claim 1, wherein a relationship between the first moment and the second moment is any one of the following correspondences:
the first moment is a start moment of the first time domain resource, and the second moment is a start moment of the second time domain resource;
the first moment is a start moment of the first time domain resource, and the second moment is an end moment of the second time domain resource;
the first moment is an end moment of the first time domain resource, and the second moment is a start moment of the second time domain resource; and
the first moment is an end moment of the first time domain resource, and the second moment is an end moment of the second time domain resource.

4. The method according to any one of claims 1 to 3, wherein the method further comprises:
determining that at least one scheduling request is in a queue.

5. The method according to claim 4, wherein after the determining that at least one scheduling request is in a queue, the method further comprises:
determining the first time threshold based on the at least one scheduling request, wherein a first correspondence exists between the at least one scheduling request and the first time threshold, and the first correspondence is configured by using higher layer signaling, or is predefined, or is notified by using physical layer signaling; and/or
determining the second time threshold based on the at least one scheduling request, wherein a second correspondence exists between the at least one scheduling request and the second time threshold, and the second correspondence is configured by using higher layer signaling, or is predefined, or is notified by using physical layer signaling.

6. The method according to claim 4 or 5, wherein the at least one scheduling request is a scheduling request corresponding to a first logical channel set, and a logical channel in the first logical channel set corresponds to a first subcarrier spacing and/or a first time length and/or a first service.

7. The method according to any one of claims 1 to 6, wherein the method further comprises:
determining that there is to-be-transmitted uplink data; or
determining uplink data corresponding to a second logical channel set, wherein a logical channel in the second logical channel set corresponds to a second subcarrier spacing and/or a second time length and/or a second service.

8. The method according to claim 7, wherein the method further comprises:
determining the first time threshold based on the uplink data, wherein a third correspondence exists between the uplink data and the first time threshold, and the third correspondence is configured by using higher layer signaling, or is predefined, or is notified by using physical layer signaling; or
determining the first time threshold based on the second logical channel set, wherein a fourth correspondence exists between the second logical channel set and the first time threshold, and the fourth correspondence is configured by using higher layer signaling, or is predefined, or is notified by using physical layer signaling.

9. The method according to claim 7, wherein the method further comprises:
determining the second time threshold based on the uplink data, wherein a fifth correspondence exists between the uplink data and the second time threshold, and the fifth correspondence is configured by using higher layer signaling, or is predefined, or is notified by using physical layer signaling; or
determining the second time threshold based on the second logical channel set, wherein a sixth correspondence exists between the second logical channel set and the second time threshold, and the sixth correspondence is configured by using higher layer signaling, or is predefined, or is notified by using physical layer signaling.

10. The method according to any one of claims 7 to 9, wherein the uplink data is uplink data corresponding to a third service, and the third service is a ultra-reliable low-latency URLLC service.

11. The method according to any one of claims 1 to 10, wherein a length of the first time domain resource is less than or equal to a third time length.

12. The method according to any one of claims 1 to 10, wherein a length of the second time domain resource is less than or equal to a fourth time length; and/or a subcarrier spacing of a frequency domain resource in which a grant-free UL-SCH resource is located is greater than or equal to a third subcarrier spacing.

13. The method according to any one of claims 1 to 10, wherein a length of the third time domain resource is less than or equal to a fifth time length; and/or a subcarrier spacing of a frequency domain resource in which a PUCCH resource carrying a scheduling request is located is greater than or equal to a fourth subcarrier spacing.

14. An apparatus for initiating a random access process, comprising:
a determining module, configured to: determine that a first time interval is greater than or equal to a first time threshold, and there is no available uplink shared channel UL-SCH resource in a first time domain resource, wherein the first time interval is a time interval between a first moment of the first time domain resource and a second moment of a second time domain resource, and the second time domain resource is a time domain resource in which a grant-free UL-SCH resource is located; and/or determine that a second time interval is greater than or equal to a second time threshold, and there is no available UL-SCH resource in a first time domain resource, wherein the second time interval is a time interval between a first moment of the first time domain resource and a third moment of a third time domain resource, and the third time domain resource is a time domain resource in which a physical uplink control channel PUCCH resource carrying a scheduling request is located; and
an initiation module, configured to initiate a random access process.

15. The apparatus according to claim 14, wherein the second time domain resource is an A^{th} time domain resource that is after the first time domain resource and in which the grant-free UL-SCH resource is located, and A is a positive integer greater than or equal to 1; and/or
the third time domain resource is a B^{th} time domain resource that is after the first time domain resource and in which the PUCCH resource carrying the scheduling request is located, and B is a positive integer greater than or equal to 1.

16. The apparatus according to claim 14, wherein a relationship between the first moment and the second moment is any one of the following correspondences:
the first moment is a start moment of the first time domain resource, and the second moment is a start moment of the second time domain resource;
the first moment is a start moment of the first time domain resource, and the second moment is an end moment of the second time domain resource;
the first moment is an end moment of the first time domain resource, and the second moment is a start moment of the second time domain resource; and
the first moment is an end moment of the first time domain resource, and the second moment is an end moment of the second time domain resource.

17. The apparatus according to any one of claims 14 to 16, wherein the determining module is further configured to:
determine that at least one scheduling request is in a queue.

18. The apparatus according to claim 17, wherein the determining module is further configured to:
after it is determined that the at least one scheduling request is in the queue, determine the first time threshold based on the at least one scheduling request, wherein a first correspondence exists between the at least one scheduling request and the first time threshold, and the first correspondence is configured by using higher layer signaling, or is predefined, or is notified by using physical layer signaling; and/or
after it is determined that the at least one scheduling request is in the queue, determine the second time threshold based on the at least one scheduling request, wherein a second correspondence exists between the at least one scheduling request and the second time threshold, and the second correspondence is configured by using higher layer signaling, or is predefined, or is notified by using physical layer signaling.

19. The apparatus according to claim 17 or 18, wherein the at least one scheduling request is a scheduling request corresponding to a first logical channel set, and a logical channel in the first logical channel set corresponds to a first subcarrier spacing and/or a first time length and/or a first service.

20. The apparatus according to any one of claims 14 to 19, wherein the determining module is further configured to:
determine that there is to-be-transmitted uplink data; or
determine uplink data corresponding to a second logical channel set, wherein a logical channel in the second logical channel set corresponds to a second subcarrier spacing and/or a second time length and/or a second service.

21. The apparatus according to claim 20, wherein the determining module is further configured to:
determine the first time threshold based on the uplink data, wherein a third correspondence exists between the uplink data and the first time threshold, and the third correspondence is configured by using higher layer signaling, or is predefined, or is notified by using physical layer signaling; or
determine the first time threshold based on the second logical channel set, wherein a fourth correspondence exists between the second logical channel set and the first time threshold, and the fourth correspondence is configured by using higher layer signaling, or is predefined, or is notified by using physical layer signaling.

22. The apparatus according to claim 20, wherein the determining module is further configured to:
determine the second time threshold based on the uplink data, wherein a fifth correspondence exists between the uplink data and the second time threshold, and the fifth correspondence is configured by using higher layer signaling, or is predefined, or is notified by using physical layer signaling; or
determine the second time threshold based on the second logical channel set, wherein a sixth correspondence exists between the second logical channel set and the second time threshold, and the sixth correspondence is configured by using higher layer signaling, or is predefined, or is notified by using physical layer signaling.

23. The apparatus according to any one of claims 20 to 22, wherein the uplink data is uplink data corresponding to a third service, and the third service is a ultra-reliable low-latency URLLC service.

24. The apparatus according to any one of claims 14 to 23, wherein a length of the first time domain resource is less than or equal to a third time length.

25. The apparatus according to any one of claims 14 to 23, wherein a length of the second time domain resource is less than or equal to a fourth time length; and/or a subcarrier spacing of a frequency domain resource in which a grant-free UL-SCH resource is located is greater than or equal to a third subcarrier spacing.

26. The apparatus according to any one of claims 14 to 23, wherein a length of the third time domain resource is less than or equal to a fifth time length; and/or a subcarrier spacing of a frequency domain resource in which a PUCCH resource carrying a scheduling request is located is greater than or equal to a fourth subcarrier spacing.

27. A computer-readable storage medium, comprising an instruction, wherein when the instruction is run on a computer, the computer is enabled to perform the method according to any one of claims 1 to 13.

28. An apparatus, comprising a processor and a memory coupled to the processor, wherein the memory is configured to store an instruction, and the processor is configured to read and execute the instruction, to perform the method according to any one of claims 1 to 13.
